# FASCICULE DE BREVET EUROPEEN

(11) **EP 0 446 148 B1**
(45) Date de publication et mention de la délivrance du brevet: **28.12.1994**
(21) Numéro de dépôt: 91420051.4
(22) Date de dépôt: 18.02.1991
(51) Int. Cl.: H02B 1/36

(54) **Tableau basse tension**
Niederspannungsschalttafel
Low voltage switchboard

(30) Priorité: 08.03.1990 FR 9003215
(43) Date de publication de la demande: 11.09.1991
(73) Titulaire: MERLIN GERIN, F-38240 Meylan (FR)
(72) Inventeur: Pin, Jean-Pierre, F-38050 Grenoble Cedex (FR); Vigne-Salade, Pierre, F-38050 Grenoble Cedex (FR); Berthet, Hugues, F-38050 Grenoble Cedex (FR); Bedrossian, Antoine, F-38050 Grenoble Cedex (FR)
(74) Mandataire: Ritzenthaler, Jacques

(56) Documents cités:
- EP-A- 0 092 774
- FR-A- 2 079 459
- GB-A- 2 134 726

## Description

L'invention est relative à un tableau électrique basse tension ayant des appareils électriques de puissance, logés dans des compartiments superposés accessibles de la face avant du tableau et raccordés d'une part à un jeu de barres d'alimentation, disposé dans un compartiment jeu de barres à l'arrière du tableau et d'autre part à des câbles de départ disposés dans des compartiments arrières de connexion client.

La distribution de l'énergie électrique dans les usines ou dans des grands immeubles nécessite des appareils de différents types, notamment des disjoncteurs , des contacteurs, des inverseurs ou des commandes de moteurs, et ces appareils sont regroupés dans des tableaux basse tension. Les besoins de ces secteurs sont bien différents et pour y répondre les tableaux sont réalisés à la demande ou en très faible série. Ceci grève les coûts de fabrication, notamment de réalisation de circuits auxiliaires ou fils fins qui regroupent les circuits de commande, de signalisation et de protection des appareils de puissance. Lors d'une évolution de l'installation alimentée par le tableau, par exemple lors du remplacement d'un appareil à commande manuelle locale par un appareil télécommandé, les circuits auxiliaires de commande et/ou de signalisation doivent être entièrement repris et la transformation est parfois pratiquement impossible lorsque les espaces disponibles sont insuffisants.

Un tableau selon l'art antérieur est par exemple décrit dans les documents EP-A- 0092774 ou GB-A- 2134726.

La présente invention à pour but de permettre une standardisation des circuits auxiliaires par la création d'une interface de signalisation et de commande des appareils de puissance, ainsi que de la connectique s'y référant.

Le tableau selon l'invention est caractérisé en ce qu'il comporte sur la face avant, adjacent auxdits compartiments superposés, une colonne en forme de gaine à perforations modulaires, identiques à celles de la partie appareillage, dans laquelle sont emboîtés et fixés des boîtiers guides cartes dont chacun peut recevoir à embrochage, à partir de la face avant, une carte à circuit imprimé, qui constitue une interface de signalisation et/ou de commande de l'appareil de puissance, logé dans le compartiment adjacent au même niveau que la carte, laquelle est solidaire d'un plastron qui obture la face avant du boîtier en position embrochée de la carte, ledit plastron ou face avant de la carte portant les éléments de signalisation et/ou de commande associés.

Chaque appareil est relié par une connectique standard au boîtier associé et ce boîtier reçoit une carte à circuit imprimé adaptée au type d'appareil. Un nombre limité de cartes, permet de répondre à la majorité des besoins, et il est avantageux d'utiliser une carte à circuit imprimé identique pour toutes les versions, la personnalisation ou l'adaptation au type d'appareil commandé étant réalisée par fixation de composants appropriés. Chaque carte est fixée à une face avant portant les éléments de commande ou de signalisation correspondants à la version de la carte, par exemple les boutons-poussoirs d'arrêt et de mise en marche d'un moteur alimenté par un contacteur, ainsi que les voyants de signalisation d'arrêt, de marche ou de défaut de ce moteur. La face avant et la carte associée peuvent comporter uniquement des éléments de signalisation, par exemple de déclenchement et/ou de défaut, et/ou d'enclenchement d'un disjoncteur associé, ou uniquement des éléments de commande arrêt/marche avec le cas échéant un commutateur de commande à distance. Toute combinaison est concevable ainsi que d'autres éléments de commande, par exemple à plusieurs vitesses ou à sens de rotation alterné d'un moteur, ou à plusieurs allures de chauffage. La face avant de la carte apparait sur la partie avant du tableau en regard de l'appareil commandé, ce qui évite tout risque de confusion ou d'erreur. La fixation des boîtiers guides cartes comporte deux montants modulaires permettant la fixation des guides par des vis à la hauteur ou au niveau du compartiment associé. La hauteur des compartiments est appropriée à la taille de l'appareil logé dans ce compartiment. La partie inutilisée de la gaine est avantageusement utilisée pour d'autres fonctions telles que des étiquettes à graver ou de l'appareillage de mesures.Toute place libre est techniquement utilisable et reste entièrement standard et modulable. Le même système d'installation est utilisable sur des armoires de hauteurs ou de modularités différentes, en associant à chaque carte une étiquette dont la hauteur variable permet le rattrapage de l'écart. L'étiquette ou l'appareillage de mesure, ou les autres dispositifs sont avantageusement disposés au dessus de la carte dont la base est alignée avec la base du compartiment associé.

Chaque compartiment de logement d'un appareil de puissance est fermé par une porte avant individuelle ou commune et un même compartiment peut contenir plusieurs appareils superposés. Dans ce cas, plusieurs cartes sont associées à un même compartiment en étant échelonnées en hauteur le long des montants pour venir en regard de l'appareil commandé. Les appareils sont fixés sur des supports ou platines de fond de compartiments avec la manette accessible de l'avant après ouverture de la porte. La commande manuelle par la manette peut également être reportée sur la porte. Il est clair que l'invention est applicable à d'autres types de tableaux ou d'armoires, par exemple à des armoires ayant des compartiments en forme de tiroirs, débrochables. Dans les tiroirs sont logés des systèmes électriques ou électroniques, tels que des contacteurs, disjoncteurs, des automatismes ou autres appareils de commande ou de puissance.

Chaque carte est embrochée sur une carte ou connecteur fond de panier disposée à l'arrière de chaque boîtier et constituant un bornier d'embrochage. La face opposée de la carte fond de panier porte des borniers pour des connecteurs de liaison de la connectique à l'appareil associé, et/ou à des circuits externes de télésignalisation ou de télécommande. La carte fond de panier ou connecteur fond de panier est une carte ou connecteur standard pour toutes les versions de cartes et les connecteurs sont équipés de détrompeurs évitant toute erreur de connexion. Sur l'un des montants, et de préférence sur le montant intercalé entre les compartiments et la gaine de logement des boîtiers guides cartes, est fixé un bandeau coloré qui s'étend sur toute la hauteur du compartiment correspondant et qui se termine à sa base par une flèche venant en regard de l'étiquette correspondante, de manière à visualiser sans aucun risque d'erreur, la correspondance entre l'étiquette et l'appareil du compartiment. La fixation du bandeau et de l'étiquette peut être réalisée par tout moyen opérant, notamment par emboîtement dans une rainure et/ou collage.

Les faces avant des cartes ainsi que les étiquettes ou caches d'obturation peuvent être vissées sur les montants, ou être encliquetées sur des clips, eux-mêmes fixés par encliquetage sur les montants.

Le fond du tableau comporte une ou plusieurs portes donnant accès à des compartiments arrivée et départ de puissance. Dans le compartiment arrivée s'étend un jeu de barres verticales d'alimentation des appareils de puissance par des barres de connexion s'étendant entre les supports de ces appareils et le jeu de barres. Dans le ou les compartiments de départ ou de connexion client, sont disposés les borniers de raccordement des câbles de départ, ces borniers étant reliés aux bornes des appareils de puissance par des conducteurs traversant un compartiment auxiliaire de puissance, dans lequel sont logés des appareils de mesures ou de comptage. Les connexions client fils fins sont de préférence regroupées sur un connecteur logé dans un compartiment adjacent ou commun à la gaine des boîtiers, ce compartiment étant accessible par une porte disposée, sur la face avant ou arrière du tableau. Ce compartiment de connexion externe est entièrement séparé des circuits de puissance et les raccordements peuvent être effectués sur un tableau sous-tension. Les cartes sont protégées par les guides cartes, généralement métalliques et éventuellement par les cloisons de la gaine solidaires des deux montants. Les connexions fils fins peuvent bien entendu être reportées en un emplacement différent du tableau si l'espace disponible sur la face avant est insuffisant. La disposition adjacente au boîtier facilite la connexion entre les cartes fond de panier et le connecteur ou bornier raccordement client.

D'autres avantages ressortiront plus clairement de la description qui va suivre, d'un mode de mise en oeuvre de l'invention donné à titre d'exemple non limitatif, et représenté aux dessins annexés dans lesquels:

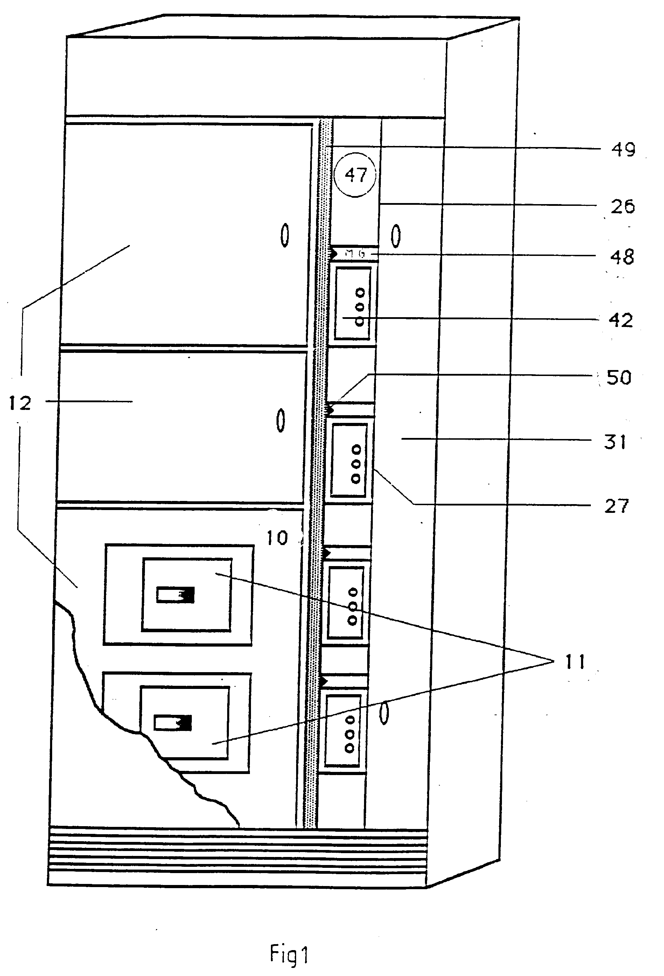

- la figure 1 est une vue schématique en perspective d'un tableau selon l'invention, l'une des portes étant partiellement arrachée;

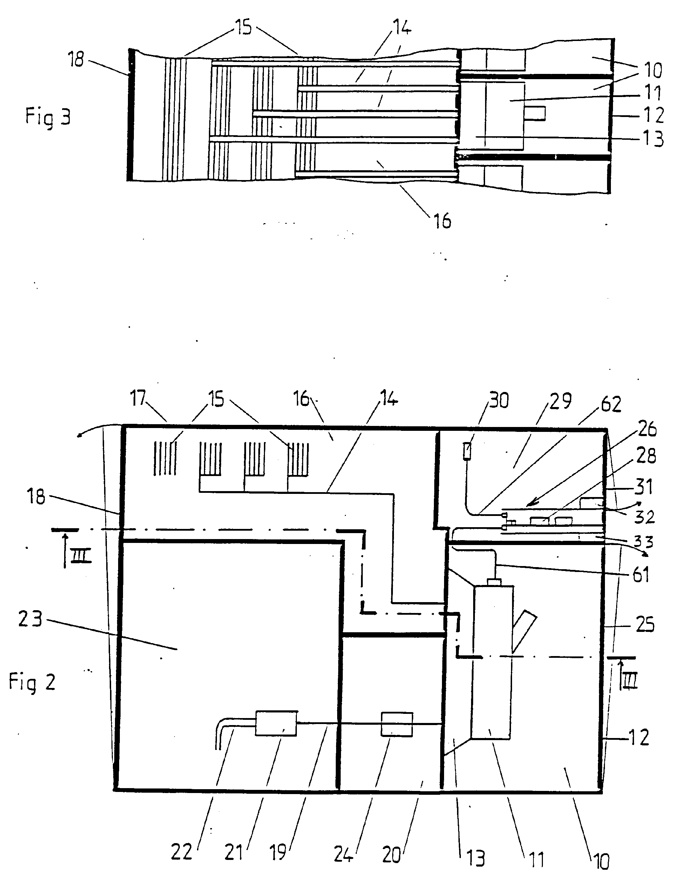

- la figure 2 est une vue en plan du tableau selon la figure 1, la face supérieure étant supposée enlevée;

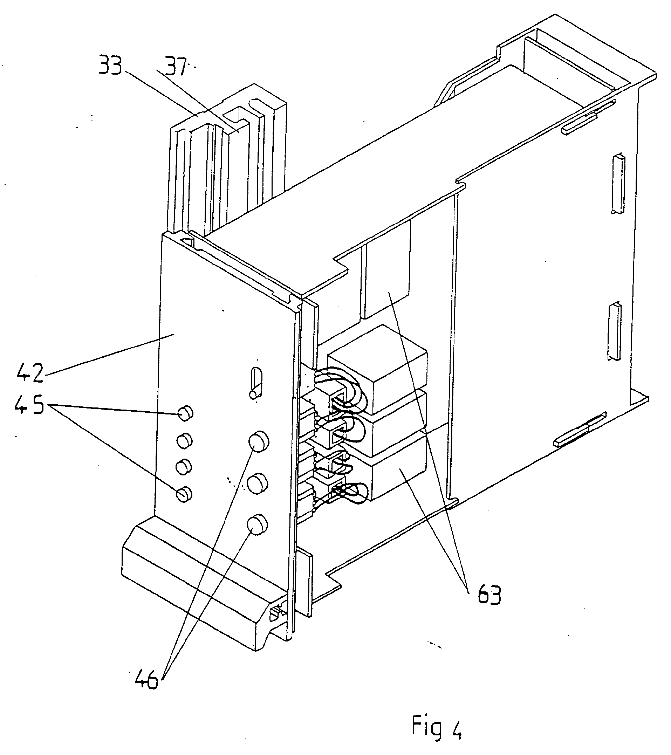

- la figure 3 est une coupe suivant la ligne brisée III-III de la figure 2;
- la figure 4 est une vue schématique en perspective d'une gaine de logement du boîtier selon la figure 2;
- la figure 5 est une vue éclatée d'un boîtier selon la figure 4, certaines parties étant arrachées;
- la figure 6 est une vue en perspective éclatée du boîtier avec la carte et la carte fond de panier;
- la figure 7 est une vue en perspective des deux montants de la gaine selon la figure 4 illustrant le mode fixation de caches et du bandeau de repérage.

Sur les figures, un tableau basse tension en forme d'armoire en tôle comporte une pluralité de compartiments 10 superposés et accessibles de la face avant de l'armoire, par l'ouverture de portes 12. Dans chaque compartiment 10 est logé un ou plusieurs appareils électriques de puissance 11, tels que des disjoncteurs, contacteurs, contacteurs inverseurs, contacteurs de commande de moteur à deux vitesses et démarreurs automatiques par contacteur. Une même porte 12 peut être commune à plusieurs compartiments, ou l'ensemble des compartiments peut être accessible par l'ouverture d'une porte unique, disposée sur la face avant de l'armoire. Les appareils de puissance 11 sont fixés sur des supports 13 solidaires de la plaque de fond des compartiments appareillage 10, et leurs bornes d'entrée sont connectées par des conducteurs 14 en forme de barres, à un jeu de barres 15 logé dans un compartiment jeu de barres 16 adjacent à l'une 17 des faces latérales de l'armoire. Le compartiment 16 s'étend jusqu'à la face arrière 18, permettant un accès à ce compartiment 16 par l'arrière du tableau. Les bornes de sortie des appareils de puissance 11 sont reliées par des conducteurs 19 traversant un compartiment auxiliaire 20, à des plages de connexion 21 de câbles de départ 22, s'étendant dans un ou plusieurs compartiments arrières superposés 23 de connexion client. Le compartiment 23 est délimité par la porte arrière 18 et la connexion des câbles de départ 22 peut être effectuée à partir de l'arrière de l'armoire après ouverture de la porte 18 . Dans le compartiment auxiliaire 20 sont logés les auxiliaires de mesure, tels que des transformateurs de courant. La fermeture de l'appareil 11 qui est par exemple un contacteur, permet l'alimentation de la charge raccordée au câble de départ 22, celle-ci étant par exemple un moteur d'une pompe ou toute autre charge. Une même armoire peut bien entendu comporter des appareils de types différents, appropriés aux charges alimentées, ce type de tableau étant particulièrement approprié à des usines ou des immeubles importants.

A côté des compartiments de puissance superposés 10 s'étend en regard de la face avant 25 de l'armoire, une colonne en forme de gaine 26 susceptible de recevoir à emboîtement des boîtiers 27 en tôle, recevant à embrochage des cartes mère 28 à circuit imprimé. Dans l'exemple de réalisation illustré par les figures, la gaine 26 est intercalée entre les compartiments superposés de puissance 10 et un compartiment 29 de connexion fils fins client, mais elle peut être disposée dans ce dernier compartiment 29. Dans le compartiment 29 s'étend un connecteur 30 de connexion externe des conducteurs de télécommande et/ou de télésignalisation. Le compartiment 29 débouche sur la face avant de l'armoire, fermée par une porte 31. La porte d'accès au compartiment 29 de connexion fils fins, peut également être disposée sur la face latérale 17 lorsque celle-ci est accessible, ou sur une autre face.

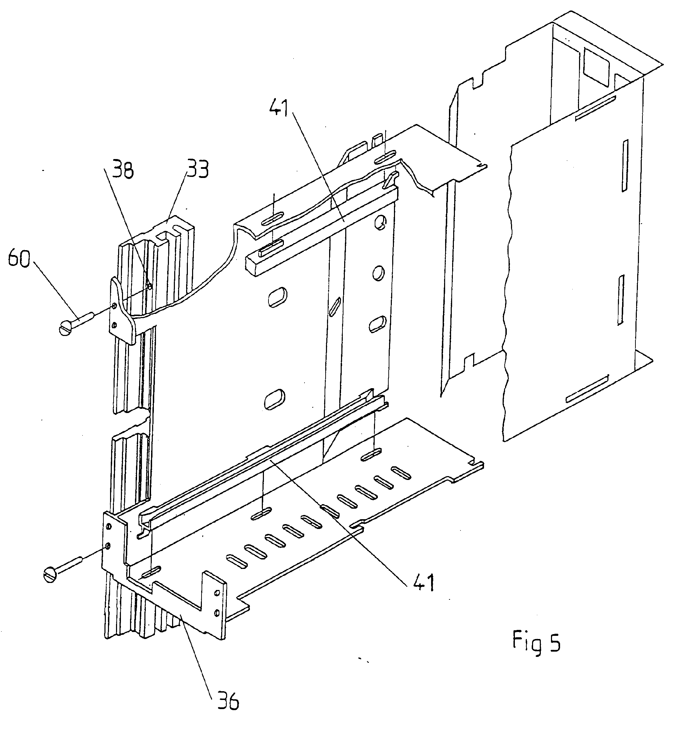

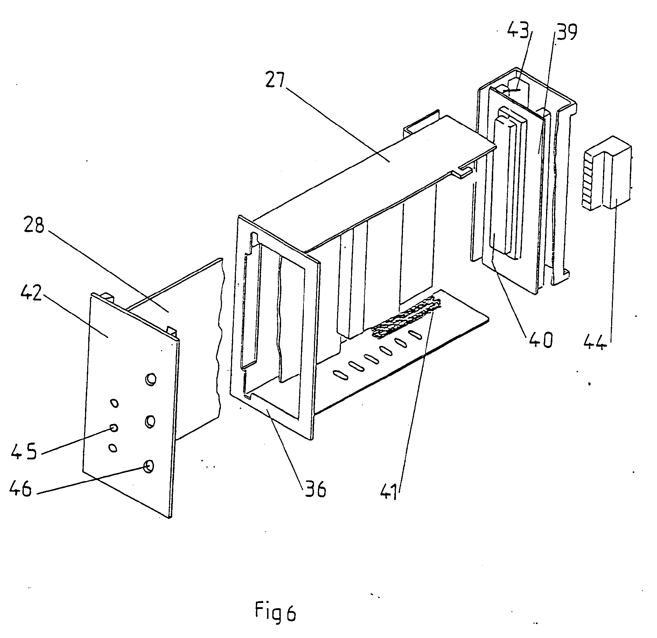

En se référant plus particulièrement aux figures 4 à 7, on voit que la gaine 26 est délimitée latéralement par deux montants profilés 32,33 adjacents à la face avant 25 de l'armoire. Les deux montants profilés 32,33 s'étendent sur toute la hauteur de l'armoire. Ils peuvent être prolongés vers l'arrière par des plaques (non représentées) qui constituent alors avec les profilés 32,33 les parois latérales d'une gaine fermée 26. L'écartement des montants profilés 32,33 correspond à la largeur des boîtiers 27 qui peuvent être emboîtés dans la gaine 26. Chaque boîtier 27 présente sur sa face avant un cadre 36 venant en position emboitée du boîtier 27 en appui de rebords 37 des profilés 32,33, en y étant fixé par des vis 60 vissées dans les perforations 38 ménagées sur les montants 32,33, à la modularité du système, et la hauteur du boîtier 27 correspond à trois modules. La valeur du module peut bien entendu être différente. Dans le fond du boîtier 27 en tôle pliée de forme parallèlépipèdique, est disposée une carte ou connecteur fond de panier 39 qui porte sur la face interne du boîtier 27, un bornier 40 d'embrochage de la carte 28. La carte mère 28 peut être insérée dans le boîtier 27 par le cadre ayant ouvert 36, et cette carte guidée par des guides fixes 41 vient en fin de course s'embrocher sur le bornier 40 de la carte ou connecteur fond de panier. Le bord opposé avant de la carte 28 est solidaire d'un plastron 42 en forme de plaque rectangulaire venant en appui du cadre 36 en fin de course d'embrochage. La carte fond de panier 39 porte sur son côté opposé à la carte 28, des borniers 43 pouvant recevoir des connecteurs de fils fins 44. Les borniers 40 et 43 sont bien entendus reliés par des connexions internes, d'une manière bien connue en soi. Certains des connecteurs 44 sont reliés par des fils 61 à l'appareil associé 11, et d'autres connecteurs 44 sont reliés par des conducteurs 62 au bornier fils fins 30 de connexion externe client. Sur la carte mère 28 sont regroupés tous les circuits, et les composants de signalisation et de commande de l'appareil de puissance 11. La face avant 42 de la carte 28, porte des éléments de signalisation 45 et/ou de commande 46. Le cloisonnement interne de l'armoire est en tôle et les circuits électroniques de la carte 28 sont de plus protégés par le boîtier métallique 27 et la gaine 26. Les cartes 28 portent toutes un circuit imprimé standard, la personnalisation en l'occurrence l'adaptation à l'appareil de puissance 11 associé, étant effectuée par la mise en place sur la carte de composants 63 appropriés. Trois types de cartes sont en général suffisants pour couvrir la gamme d'appareils électriques de puissance 11, utilisés dans de telles armoires, le nombre pouvant bien entendu être supérieur lorsque des fonctions additionnelles sont prévues. La face avant 42 est également adaptée au type de cartes 28, les trois faces avant type étant par exemple une face avant ayant uniquement des éléments de signalisation 45 en forme de diodes luminescentes signalant par exemple, l'ouverture, la fermeture et/ou le déclenchement d'un disjoncteur 11. Un autre type de face avant comporte les mêmes trois éléments de signalisation 45 et deux élements de commande 46, par exemple deux boutons-poussoirs de commande de fermeture et d'ouverture du disjoncteur ou du contacteur commandé. Un troisième type de carte présente sur le plastron face avant 42 quatre éléments de signalisation 45 et trois boutons-poussoirs 46, l'un de ces boutons commandant par exemple la marche avant d'un moteur, et l'autre la marche arrière. Aux deux derniers types de carte peuvent correspondrent deux cartes additionnelles identiques mais avec un dispositif de commutation pour une commande à distance. Cette gamme de cartes est donnée à titre d'exemple, et il est clair que toute autre combinaison est concevable.

La carte 28 constitue une interface entre l'appareil de puissance 11 et les éléments de commande locale 46 et/ou les éléments de télécommande reliés au bornier fils fins externes 30. Cette même carte 28 constitue une interface de signalisation entre l'appareil de puissance 11 et les éléments de signalisation locaux 45 et/ou les éléments de télésignalisation, reliés au bornier de connexion fils fins externes 30. Les cartes 28 avec leurs faces avant 42 sont interchangeables par simple débrochage et une modification, par exemple l'adjonction d'une télécommande est réalisée par simple changement de carte 28. Des détrompeurs évitent la mise en place de cartes incompatibles.

Il est important de visualiser sur la face avant de l'armoire, le plastron face avant 42 correspondant à l'appareil commandé, et à cet effet il est prévu de disposer le boîtier 27 de manière à ce que la base du boîtier affleure avec la base du compartiment 10 recevant l'appareil de puissance associé 11. La modularité du système permet une telle fixation et les parties de la gaine 26 qui ne sont pas occupées par les boîtiers 27 sont obturées par des caches 47. Les armoires sont bien entendu du type modulaire et lorsque cette modularité correspond à celle des montants 32,33, il est facile de disposer les boîtiers 27 en regard de la base des compartiments 10. Les mêmes montants 32,33 peuvent être adaptés à des armoires d'une modularité différente en rattrapant l'écart par l'emploi d'étiquettes 48, disposées de préférence au dessus du boîtier 27. On peut bien entendu prévoir des hauteurs d'étiquettes correspondant exactement à l'écart de modularité, mais un nombre limité d'étiquettes est généralement suffisant pour rattraper ces écarts. L'étiquette porte les indications relatives à l'appareil de puissance commandé et éventuellement les identifications du fabricant.

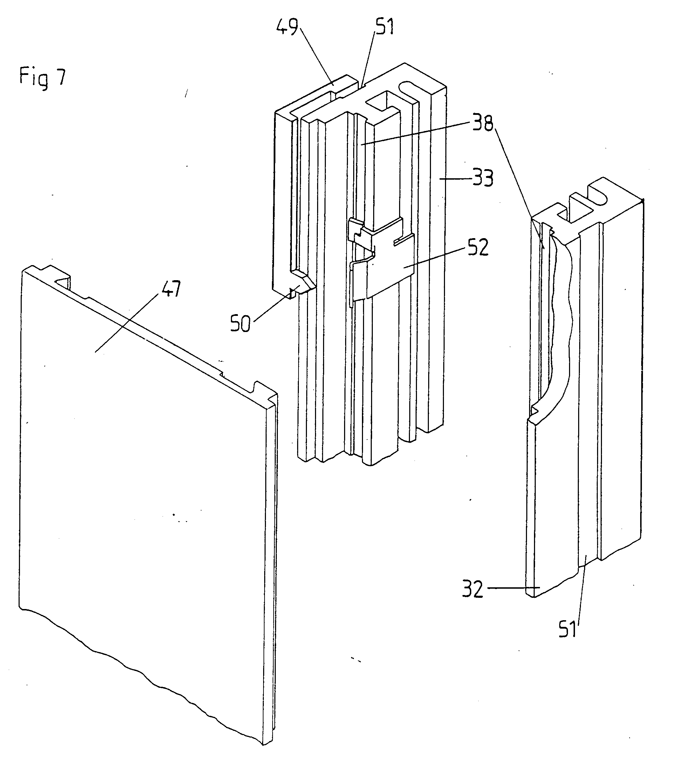

Selon un développement de l'invention, le repérage est amélioré par fixation d'un bandeau 49 en bordure du compartiment 10, qui s'étend sur toute la hauteur de ce compartiment. Le bandeau 49 se termine par une flèche 50 pointant sur l'étiquette 48 correspondante. Le bandeau 49 et l'étiquette 48 sont d'une couleur appropriée montrant clairement que l'étiquette 48 et bien entendu le boîtier 27 disposé en dessous de cette étiquette 48, correspondent à l'appareil 11 logé dans le compartiment 10 en regard du bandeau 49. Le bandeau 49 peut être positionné par emboîtement dans une rainure 51 ménagée dans le montant 33 adjacent au compartiment superposé 10, la fixation pouvant être réalisée par simple collage. Les étiquettes 48 peuvent être fixées par des vis se vissant dans les perforations 38 des montants 32,33 ou de préférence de la manière illustrée à la figure 7, par encliquetage sur des clips 52 clipsés sur des rebords des montants 32,33. Les caches 47 sont fixés de la même manière par encliquetage ou par vissage sur les montants 32,33 pour autoriser éventuellement un démontage et une adjonction d'un boîtier 27 additionel ou une adaptation en cas de changement du cloisonnement de l'armoire.

La connectique 61 entre les boîtiers 27 et les appareils 11 est standard, ainsi d'ailleurs que la connectique 62 entre les boîtiers 27 et le bornier fils fins externe 30. Un nombre limité de cartes 28 interchangeables permet de répondre à tous les besoins de commande et de signalisation des appareils de puissance 11, ce qui permet une standardisation de ce type de tableau, et de sa connectique.

Il est clair que le système d'installation des boîtiers 27 sur les deux montants 32,33 peut être utilisé sur d'autres types d'armoires. La gaine 26 peut par exemple être accolée à un profilé de l'ossature de l'armoire, du côté interne ou externe, ou être logée à tout emplacement approprié disponible dans une armoire. La commande locale est reportée sur la face avant 42 mais la commande manuelle de l'appareil reste accessible après ouverture de la porte du compartiment 10. Les appareils 11 peuvent être du type débrochable, ce qui facilite le montage et la hauteur de chaque compartiment est adaptée au type d'appareil logé dans ce compartiment.

Le système est applicable à tous les types de tableaux, notamment à ceux ayant des tiroirs superposés de logement des appareils de puissance 11, ces tiroirs constituant les compartiments 10 et les appareils étant alors de préférence débrochables par ouverture du tiroir.

## Revendications

1. Tableau électrique basse tension ayant des appareils électriques de puissance (11), logés dans des compartiments superposés (10) accessibles de la face avant (25) du tableau et raccordés d'une part à un jeu de barres (17) d'alimentation, disposé dans un compartiment (16) jeu de barres à l'arrière du tableau et d'autre part à des câbles de départ (22) disposés dans des compartiments arrières (23) de connexion client, caractérisé en ce qu'il comporte sur la face avant, adjacent auxdits compartiments superposés (10), une colonne en forme de gaine (26) à perforations (38) modulaires, dans laquelle gaine sont emboîtés et fixés des boîtiers (27) dont chacun peut recevoir à embrochage, à partir de la face avant (25), une carte (28) à circuit imprimé, qui constitue une interface de signalisation et/ou de commande de l'appareil de puissance (11), logé dans le compartiment adjacent (10) au même niveau et que la carte (28) est solidaire d'un plastron face avant (42) qui obture la face avant (36) du boîtier (27) en position embrochée de la carte (28), ledit plastron (42) portant les éléments de signalisation (45) et/ou de commande (46) associés.

2. Tableau selon la revendication 1, caractérisé en ce que ladite gaine (26) comporte deux montants profilés (32,33) disposés à proximité de la face avant (25), entre lesquels sont fixés lesdits boîtiers (27) en étant échelonnés le long des montants (32,33) selon un pas défini par les perforations modulaires (38) des montants.

3. Tableau selon la revendication 1 ou 2, caractérisé en ce que les cartes interchangeables (28) portent un circuit imprimé standard et sont personnalisées par fixation de composants (63) appropriés et d'un plastron (42) correspondant auxdits composants.

4. Tableau selon la revendication 1,2 ou 3, caractérisé en ce que chaque boîtier (27) présente une carte ou un connecteur fond de panier (39) formant d'un côté un bornier (40) d'embrochage de la carte (28) logée dans le boîtier et du côté opposé un bornier (43) pour des connecteurs (44) de liaison à l'appareil associé (11) et/ou à des circuits externes (30) de télésignalisation ou de télécommande.

5. Tableau selon l'une quelconque des revendications précédentes, caractérisé en ce qu'une étiquette (48) modulaire de repérage des caractéristiques de l'appareil (11) est fixée à ladite gaine (26) au dessus du plastron face avant (42) de la carte (28) correspondante.

6. Tableau selon la revendication 5, caractérisé en ce qu'une différence entre la modularité du tableau et celle des boîtiers (27) est rattrapée par l'étiquette (48) de hauteur appropriée, disposée au dessus des boîtiers respectifs (27).

7. Tableau selon la revendication 2, caractérisé en ce que l'un (33) des montants présente une rainure (51) de fixation d'un bandeau (49) et d'une flèche (50) de repérage de l'étiquette (48) et que ledit bandeau s'étend sur la face avant (25) le long du compartiment (10) de l'appareil (11), correspondant à l'étiquette repérée par la flèche.

8. Tableau selon l'une quelconque des revendications précédentes, caractérisé en ce que le plastron face avant (42) de la carte (28) et/ou les étiquettes (48) et caches (47) d'obturation de ladite gaine (26) présentent des crochets d'encliquetage sur des clips (52), eux-mêmes fixés par encliquetage sur les montants (32,33) encadrant latéralement la gaine (26).

9. Tableau selon l'une quelconque des revendications précédentes, caractérisé en ce que la gaine (26) de logement des boîtiers (27) est intercalée entre lesdits compartiments superposés (10) et un compartiment (29) de logement d'un bornier (30) de connexion externe des circuits de signalisation et de ce dernier compartiment (29) étant accessible par une porte (31), disposée sur la face avant ou arrière.

10. Tableau selon l'une quelconque des revendications précédentes, caractérisé en ce que la connectique reliant les différentes parties auxiliaires de contrôle et/ou de commande du tableau est entièrement standardisée.

## Patentansprüche

1. Niederspannungs-Schaltanlage mit elektrischen Leistungs-Schaltgeräten (11), die in von der Frontseite (25) der Schaltanlage zugänglichen, übereinander angeordneten Abteilen (10) untergebracht sind und einerseits an in einem Sammelschienenraum (16) im rückwärtigen Bereich der Schaltanlage verlaufende Einspeise-Sammelschienen (17) und andererseits an in rückwärtigen Abteilen (23) für die anwenderseitigen Anschlüsse angeordnete Abgangskabel (22) angeschlossen sind, dadurch gekennzeichnet, daß an ihrer Frontseite, angrenzend an die genannten übereinanderliegenden Abteile (10), ein schachtförmiger Anschlußraum (26) mit entsprechend einem modularen Teilungsmaß versetzten Befestigungslöchern (38) angeordnet ist, wobei in dem Anschlußraum Gehäuse (27) eingesetzt und befestigt sind, die jeweils zur über die Frontseite (25) erfolgenden Steckmontage einer als Anzeige- und/oder Steuerschnittstelle für das im entsprechenden angrenzenden Abteil (10) in der gleichen Höhe montierte Leistungs-Schaltgerät (11) fungierenden Leiterplatte (28) dienen, die fest mit einer, bei eingesteckter Leiterplatte (28) die Vorderseite (36) des Gehäuses (27) abdeckenden Frontplatte (42) verbunden ist, wobei die genannte Frontplatte (42) mit den zugeordneten Anzeigemitteln (45) und/oder Betätigungsorganen (46) bestückt ist.

2. Schaltanlage nach Anspruch 1, dadurch gekennzeichnet, daß der genannte Anschlußraum (26) zwei in der Nähe der Frontseite (25) angeordnete Längsträgerprofile (32, 33) aufweist, zwischen denen die genannten Gehäuse (27) befestigt sind, wobei sie entsprechend einem durch den Abstand der Befestigungsbohrungen (38) vorgegebenen modularen Teilungsmaß entlang der Längsträgerprofile (32, 33) versetzt angeordnet sind.

3. Schaltanlage nach Anspruch 1 oder 2, dadurch gekennzeichnet, daß die austauschbaren Leiterplatten (28) eine gedruckte Standard-Schaltung aufweisen und die anwenderspezifische Anpassung durch Bestückung mit geeigneten Komponenten (63) und einer auf die Komponenten abgestimmten Frontplatte (42) erfolgt.

4. Schaltanlage nach Anspruch 1, 2 oder 3, dadurch gekennzeichnet, daß jedes Gehäuse (27) mit einer Chassis-Grundplatine oder einem Chassis-Steckverbinder (39) bestückt ist, die zur einen Seite hin als Steckleiste (40) zur Aufnahme der im Gehäuse angeordneten Leiterplatte (28) und zur gegenüberliegenden Seite hin als Anschlußleiste (43) zur Aufnahme von Steckverbindern (44) für den Anschluß des zugeordneten Schaltgeräts (11) und/oder der äußeren Stromkreise (30) für die Fernanzeige- bzw. Fernbetätigungsfunktionen ausgeführt sind.

5. Schaltanlage nach irgendeinem der vorhergehenden Ansprüche, dadurch gekennzeichnet, daß ein entsprechend dem modularen Teilungsmaß ausgeführtes Typenschild (48) mit den Kenndaten des Schaltgeräts (11) oberhalb der Frontplatte (42) der zugehörigen Leiterplatte (28) am genannten Anschlußraum (26) befestigt ist.

6. Schaltanlage nach Anspruch 5, dadurch gekennzeichnet, daß eine Abweichung zwischen den modularen Teilungsmaßen der Schaltanlage einerseits und der Gehäuse (27) andererseits durch das oberhalb der entsprechenden Gehäuse (27) angeordnetes Schild (48) mit geeigneter Höhe ausgeglichen wird.

7. Schaltanlage nach Anspruch 2, dadurch gekennzeichnet, daß eines (33) der Längsträgerprofile eine Nut (51) zur Befestigung einer Kennleiste (49) und eines Zeigers (50) zur Markierung des Schilds (48) aufweist und daß sich die genannte Kennleiste an der Frontseite (25) entlang desjenigen Abteils (10) des Schaltgeräts (11) erstreckt, das dem durch den Zeiger markierten Schild zugeordnet ist.

8. Schaltanlage nach irgendeinem der vorhergehenden Ansprüche, dadurch gekennzeichnet, daß die Frontplatte (42) der Leiterplatte (28) und/oder die Schilder (48) und Abdeckblenden (47) des genannten Anschlußraums (26) Rasthaken zur Schnappmontage auf Clips (52) aufweisen, die ihrerseits auf die den Anschlußraum (26) seitlich begrenzenden Längsträgerprofile (32, 33) aufgeschnappt sind.

9. Schaltanlage nach irgendeinem der vorhergehenden Ansprüche, dadurch gekennzeichnet, daß der Anschlußraum (26) zur Aufnahme der Gehäuse (27) zwischen den genannten übereinanderliegenden Abteilen (10) und einem Abteil (29) zur Aufnahme einer Klemmleiste (30) für den Anschluß der äußeren Anzeige- und Steuerstromkreise angeordnet ist, wobei der Zugang zu dem genannten Abteil (29) über eine an der Frontseite oder Rückseite angebrachte Tür (31) erfolgen kann.

10. Schaltanlage nach irgendeinem der vorhergehenden Ansprüche, dadurch gekennzeichnet, daß für die Anschlußverbindungen zwischen den einzelnen Hilfsstromkreisen für die Überwachungs- und Steuerfunktionen der Schaltanlage ausschließlich Standardkomponenten verwendet werden.

## Claims

1. A low voltage electrical switchboard having electrical power switchgear apparatuses (11), housed in superposed compartments (10) accessible via the front panel (25) of the switchboard and connected on the one hand to a supply busbar (17), located in a busbar compartment (16) at the rear of the switchboard and on the other hand to outgoing cables (22) located in customer-connected rear compartments (23), characterized in that it comprises on the front panel, adjacent to said superposed compartments (10), a column in the form of a conduit (26) with modular holes (38), in which conduit there are slotted and fixed enclosures (27) each of which can accommodate, via the front panel (25), a plug-in printed circuit board (28), which constitutes an indication and/or control interface of the power apparatus (11), housed in the adjacent compartment (10) at the same level and that the board (28) is securedly affixed to a front plate (42) which blanks off the front panel (36) of the enclosure (27) in the plugged-in position of the board (28), said front plate (42) bearing the associated devices for indication (45) and/or control (46).

2. The switchboard according to claim 1, characterized in that said conduit (26) comprises two uprights (32, 33) located in proximity to the front panel (25), between which uprights said enclosures (27) are fixed staggered along the uprights (32, 33) with a pitch defined by the modular holes (38) of the uprights.

3. The switchboard according to claim 1 or 2, characterized in that the interchangeable boards (28) bear a standard printed circuit and are customized by fixing of suitable components (63) and of a front plate (42) corresponding to said components.

4. The switchboard according to claim 1, 2 or 3, characterized in that each enclosure (27) has a backplane board or connector (39) forming on one side a terminal block (40) for plugging-in of the board (28) housed in the enclosure and on the opposite side a terminal block (43) for connectors (44) for connection to the associated apparatus (11) and/or to external remote indication or remote control circuits (30).

5. The switchboard according to any one of the above claims, characterized in that a modular label (48) for marking the characteristics of the apparatus (11) is fixed to said conduit (26) above the front plate (42) of the corresponding board (28).

6. The switchboard according to claim 5, characterized in that a difference between the modularity of the switchboard and that of the enclosures (27) is compensated by the label (48) of suitable height, located above the respective enclosures (27).

7. The switchboard according to claim 2, characterized in that one (33) of the uprights has a groove (51) for fixing a strip (49) and an arrow (50) marking the label (48) and that said strip extends over the front panel (25) along the compartment (10) of the apparatus (11), corresponding to the label marked by the arrow.

8. The switchboard according to any one of the above claims, characterized in that the front panel (42) of the board (28) and/or the labels (48) and cover plates (47) of said conduit (26) present hooks for clipping onto clips (52), themselves fixed by clipping onto the uprights (32, 33) framing the conduit (26) laterally.

9. The switchboard according to any one of the above claims, characterized in that the conduit (26) housing the enclosures (27) is fitted between said superposed compartments (10) and a compartment (29) housing a terminal block (30) for external connection of the indication and control circuits, the latter compartment (29) being accessible via a door (31), located on the front or rear.

10. The switchboard according to any one of the above claims, characterized in that the connectors connecting the different auxiliary instrumentation and/or control parts of the switchboard are fully standardized.
